# FASCICULE DE BREVET EUROPEEN

(11) **EP 2 994 321 B1**
(45) Date de publication et mention de la délivrance du brevet: **01.09.2021**
(21) Numéro de dépôt: 14726692.8
(22) Date de dépôt: 22.04.2014
(51) Int. Cl.: B43K 29/00, G06F 3/0354

(54) **EMBOUT POUR ÉCRAN CAPACITIF**
SPITZE FÜR KAPAZITIVEN BERÜHRUNGSBILDSCHIRM
TIP FOR A CAPACITIVE TOUCHSCREEN

(30) Priorité: 06.05.2013 FR 1354145
(43) Date de publication de la demande: 16.03.2016
(73) Titulaire: Société BIC, 92110 Clichy (FR)
(72) Inventeur: BEZ, Arnaud, F-92380 Garches (FR); BOISDEVESYS, David, F-94400 Vitry sur Seine (FR)
(74) Mandataire: Cabinet Beau de Loménie
(86) Numéro de dépôt international: PCT/FR2014/050970
(87) Numéro de publication internationale: WO 2014/181052

(56) Documents cités:
- EP-A1- 2 466 424
- DE-U1-202011 100 847
- US-A1- 2011 261 026
- US-A1- 2011 304 577
- US-A1- 2012 098 798

## Description

### DOMAINE DE L'INVENTION

L'invention concerne un crayon équipé d'un embout pour écran capacitif adaptable sur un crayon.

Un embout pour écran capacitif est un embout qui permet d'utiliser un écran capacitif, comme par exemple une tablette graphique. Un tel embout est capable d'interférer/interagir avec l'écran capacitif, de sorte que sa présence en un point donné dudit écran capacitif est détectable par ce dernier.

### ETAT DE LA TECHNIQUE ANTERIEURE

Pour utiliser cet écran capacitif, un stylet pour écran capacitif est souvent nécessaire. Néanmoins, un tel stylet est souvent un instrument spécifique et onéreux.

US 2011/0261026 divulgue un stylet pour téléphone cellulaire, EP 2 466 424 divulgue un stylet, US 2011/0304577 divulgue un stylet pour écran tactile capacitif, DE 20 2011 100 847 divulgue un stylo équipé d'un embout pour écran capacitif et US2012/098798 divulgue pinceau conducteur destiné à être utilisé avec un dispositif informatique.

### PRESENTATION DE L'INVENTION

Le but de la présente invention est de remédier au moins substantiellement aux inconvénients mentionnés ci-avant.

L'invention est définie par la revendication 1. Le présente exposé vise par ailleurs un embout pour écran capacitif configuré pour être monté sur un crayon comprenant une âme conductrice, dans lequel ledit embout comprend une embase sur laquelle est monté un coussinet de contact pour écran capacitif, et un contacteur configuré pour assurer une liaison électrique entre le coussinet et l'âme conductrice du crayon.

Par la suite, et sauf indication contraire, par le terme « conducteur » ou « conductrice » on comprend « conducteur/conductrice de courant électrique ». Inversement, par la suite, et sauf indication contraire, par le terme « isolant » ou « isolante » on comprend « isolant/isolante vis-à-vis du courant électrique ».

Un crayon ayant une mine, par exemple une mine graphite, il présente une âme conductrice, ladite mine formant cette âme longitudinale interne conductrice. La mine s'étendant sur toute la longueur du crayon, on comprend que l'âme conductrice s'étend sur toute la longueur du crayon. De manière générale, on comprend que l'âme conductrice est une âme interne longitudinale conductrice s'étendant selon la direction axiale dudit crayon.

L'embout comprend une embase. Un coussinet est monté sur cette embase. Par exemple, le coussinet est collé, encliqueté (ou clipsé), ou maintenu sur l'embase par tout autre moyen connu par ailleurs. On comprend donc que le coussinet est distinct de l'embase ou, en d'autres termes, que l'embase et le coussinet sont deux éléments distincts. Ceci permet d'adapter les caractéristiques physiques, notamment, mais pas uniquement, la rigidité du support et du coussinet à leurs fonctions, et ce indépendamment l'un de l'autre.

On comprend que le coussinet (en anglais « pad ») est une terminaison configurée pour interagir avec un écran capacitif. Le coussinet est conducteur. La forme, la souplesse/rigidité et le/les matériaux d'un coussinet ne sont pas limités dans la mesure où ce coussinet est capable d'interagir avec un écran capacitif, c'est-à-dire que son contact avec un écran capacitif est détectable par ce dernier.

Le contacteur est directement ou indirectement relié électriquement au coussinet. Par exemple, un contacteur comprenant une patte touchant le coussinet forme un contacteur directement relié/en contact électrique avec le coussinet. Selon un autre exemple, un contacteur en contact avec le coussinet par l'intermédiaire d'un élément conducteur distinct du contacteur et du coussinet, par exemple un fil métallique ou l'embase lorsque cette dernière est en matériau conducteur, forme un contacteur indirectement relié/en contact électrique avec le coussinet. On comprend bien entendu que le coussinet et le contacteur sont conducteurs (grâce à leur matériau de fabrication, ou grâce à un revêtement).

Ainsi, grâce au contacteur, lorsque l'embout est monté sur un crayon, le coussinet est en contact électrique avec l'âme du crayon.

Les inventeurs ont constaté avec surprise que lorsque l'utilisateur manipule un crayon équipé de l'embout selon le présent exposé, l'âme conductrice et la zone de préhension du crayon étant en recouvrement, la surface d'un écran capacitif est sensible à la présence, de préférence au contact, du coussinet, et ce bien qu'il n'y ait pas de contact électrique direct entre la main et l'âme, ni entre la main et l'embout. En effet, il est très généralement admis par l'homme du métier que pour qu'un coussinet interagisse avec un écran capacitif, il faut impérativement un contact électrique entre le coussinet et la main de l'utilisateur.

Par exemple un crayon à mine du type graphite (formant ainsi un crayon graphite) ou d'un autre type (la mine étant toutefois conductrice), présente une couche extérieure (ou corps) isolant, par exemple en bois ou en matériau polymère isolant. La mine d'un tel crayon s'étend classiquement sur toute la longueur de ce dernier. Lorsque l'utilisateur manipule le crayon équipé de l'embout selon le présent exposé, un écran capacitif est sensible à l'embout alors qu'il n'y a aucun contact électrique entre l'embout ou l'âme et la main de l'utilisateur. Bien entendu, l'écran n'est pas sensible au crayon équipé de l'embout s'il n'est pas manipulé par une main, ou si la main n'est pas placée sur une zone du crayon en recouvrement avec l'âme.

Ainsi, grâce à cet effet surprenant, on peut monter l'embout selon le présent exposé sur un crayon classique déjà en possession de l'utilisateur pour former un stylet pour écran capacitif, ce qui permet de s'affranchir d'un stylet spécifique et des coûts associés.

On comprend que l'embout est un embout du type passif, et forme, lorsqu'il est monté sur un crayon, un stylet pour écran capacitif du type passif. Pour rappel, un instrument dit « passif » est un instrument qui n'a pas besoin d'être alimenté par une source d'énergie pour assurer son fonctionnement. A l'inverse, un instrument dit « actif » fonctionne à l'aide d'une source d'énergie, par exemple une batterie électrique interne. En d'autres termes, l'embout et le stylet formé avec cet embout ne comprennent aucune source d'énergie, notamment électrique, interagissant avec le coussinet.

Avantageusement, l'embout est de forme sensiblement cylindrique tandis que le contacteur est disposé au voisinage de l'axe central de la forme sensiblement cylindrique.

Par exemple la forme sensiblement cylindrique présente une section transversale de forme circulaire, elliptique, polygonale, etc. Un tel embout est particulièrement adapté pour les crayons dont l'âme est centrale.

Avantageusement, le coussinet et le contacteur sont respectivement disposés sur des côtés opposés de l'embase.

On comprend que le coussinet est disposé à l'opposé du connecteur par rapport à l'embase. Une telle disposition facilite le montage de l'embout sur le crayon tout en assurant l'ergonomie de l'embout et de l'ensemble formé par le crayon équipé de l'embout.

Avantageusement, le contacteur comprend une saillie conductrice.

On comprend que la saillie du contacteur s'étend depuis l'embase. Une telle saillie présente l'avantage de facilement coopérer en appui avec l'âme du crayon lors du montage de l'embout sur le crayon. Grâce à cette saillie, on améliore le contact électrique entre le contacteur et l'âme. Par exemple, cette saillie est en forme de pointeau, mais toute autre forme est également envisageable. On comprend également que la saillie est en matériau conducteur, comme par exemple du métal, ou alors présente un revêtement conducteur, comme par exemple une couche métallique.

Avantageusement, la saillie s'étend selon la direction axiale du crayon depuis l'embase. En d'autres termes on comprend que la saillie s'étend longitudinalement selon la direction axiale. On comprend donc que la saillie coopère axialement avec l'âme. En s'étendant selon la direction axiale, la saillie est configurée pour coopérer de manière optimale avec l'âme qui s'étend elle-même longitudinalement selon la direction axiale.

Avantageusement, le contacteur comprend un ressort travaillant en compression.

On comprend qu'un ressort travaillant en compression (ou ressort à compression) est un élément élastique qui tend à s'opposer aux efforts en compression qu'on pourrait lui appliquer. Bien entendu, le ressort peut former ou ne pas former une saillie de contacteur. Le ressort peut également ne pas former une saillie mais porter un élément distinct qui lui forme une saillie (i.e. le ressort ne s'étend pas depuis l'embase, par exemple en étant disposé dans un logement de l'embase, tandis que l'élément distinct s'étend depuis l'embase). Selon encore une autre variante, le ressort et l'élément distinct forment une saillie (i.e. le ressort s'étend en tout ou partie depuis l'embase tandis que l'élément distinct s'étend depuis l'embase par l'intermédiaire du ressort). Par exemple, le ressort est monté sur l'embase tout en étant configuré pour contacter directement l'âme. Selon un autre exemple, le ressort est monté sur l'embase tandis qu'un pointeau est montée sur le ressort.

Ainsi, le ressort est comprimé lorsqu'on monte l'embout sur le crayon, grâce à quoi un contact permanent est assuré entre le contacteur et l'âme. Un tel ressort permet également d'assurer le contact avec l'âme lorsque l'embout n'est pas correctement monté sur le crayon.

Le ressort est avantageusement distinct de l'embase. En d'autres termes, le ressort et l'embase sont deux éléments distincts. Ceci permet notamment de plus facilement adapter les caractéristiques physiques du ressort, comme par exemple sa rigidité. Ceci présente également l'avantage de simplifier la fabrication de l'embase, cette dernière formant ainsi une pièce moins complexe.

Avantageusement l'embase comprend un logement recevant en tout ou partie le ressort.

Un tel logement permet de guider le ressort dans ses mouvements de compression/détente lorsque l'embout est monté ou démonté du crayon. Le logement forme également un espace pour recevoir le ressort lorsque ce dernier est comprimé. On réduit ainsi l'encombrement général de l'embout. Ceci permet également de réduire la masse de l'embout.

Avantageusement, l'embout comprend une jupe s'étendant depuis l'embase à l'opposé du coussinet, ladite jupe étant configurée pour assembler ledit embout à une extrémité du crayon.

Grâce à la jupe, il suffit d'emmancher une extrémité libre du crayon, de préférence l'extrémité opposée à l'extrémité d'écriture si une telle extrémité d'écriture est présente sur le crayon, dans la cavité définie par la jupe pour monter l'embout sur le crayon. Par exemple, pour assurer le positionnement et le maintien de l'embout sur le crayon, l'emmanchement est réalisé à force, ou bien on déforme la jupe, par exemple par poinçonnage.

Avantageusement, l'embase et la jupe forment une seule et même pièce. Ceci présente l'avantage de réduire le nombre de pièces distinctes de l'embout et de simplifier sa structure. Ceci permet également d'assurer une meilleure robustesse du point de vue mécanique.

Selon une variante, la jupe présente avantageusement une paroi interne sensiblement cylindrique équipée d'un filetage pour visser l'embout sur une extrémité du crayon.

Dans cet exemple, pour monter l'embout sur le crayon, il suffit de visser une extrémité libre du crayon dans la cavité définie par la jupe.

Avantageusement, le contacteur est disposé en tout ou partie dans la cavité formée par la jupe.

Ainsi, lorsqu'on introduit le crayon dans la cavité définie par la jupe, on amène naturellement l'âme du crayon au contact du contacteur. Lors de l'assemblage de l'embout avec le crayon on réalise donc simultanément deux opérations, à savoir le montage de l'embout sur le crayon et la connexion électrique entre le contacteur et l'âme.

Avantageusement, l'embout est configuré pour être monté de manière amovible sur un crayon.

Ceci permet d'utiliser le même embout avec plusieurs crayons différents.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages annexées des figures, sur lesquelles :
- la figure 1 représente une vue en perspective d'un crayon graphite équipé d'un embout selon un premier mode de réalisation,
- la figure 2 représente l'embout de la figure 1, vu en éclaté en perspective,
- la figure 3 représente une vue en coupe axiale de l'embout de la figure 1 en approche de l'extrémité arrière du crayon graphite,
- la figure 4 représente la même vue que la figure 3 lorsque l'embout n'est pas totalement vissé sur le crayon,
- la figure 5 représente la même vue que la figure 3 lorsque l'embout est totalement vissé sur le crayon graphite,
- la figure 6 représente deux types de zone de préhension par rapport à une âme de crayon,
- la figure 7 représente un embout selon un deuxième mode de réalisation, vu en coupe axiale et en approche de l'extrémité arrière du crayon graphite, et
- la figure 8 représente l'embout de la figure 7, selon la même vue, lorsque l'embout est totalement vissé sur le crayon graphite.

### DESCRIPTION DETAILLEE D'EXEMPLES DE REALISATION

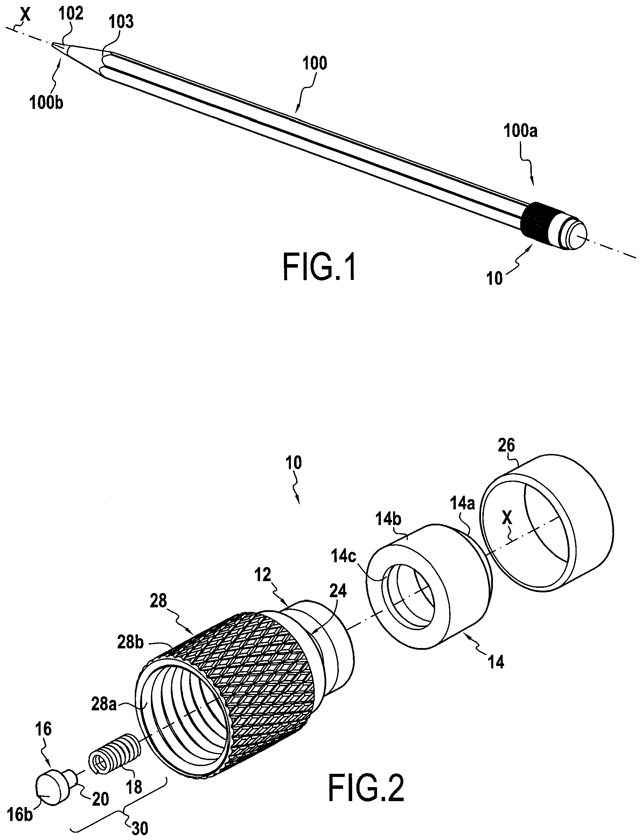

La figure 1 représente un crayon à mine graphite 100 équipé d'un embout pour écran capacitif 10 selon l'invention. Le crayon 100 s'étend axialement selon la direction axiale X, la mine graphite 102 du crayon graphite 100 formant une âme interne longitudinale conductrice de courant électrique s'étendant également axialement selon la même direction axiale X sur toute la longueur du crayon 100. Selon une variante, la mine 102 peut être une mine conductrice fabriquée à partir d'un autre matériau conducteur que du graphite. Un corps de crayon 103 en bois entoure l'âme 102. Selon une variante, le corps 103 est en polymère expansé. L'embout 10 est monté à l'extrémité 100a opposée à l'extrémité 100b du crayon présentant la pointe d'écriture dudit crayon, l'extrémité 100a pouvant également être appelée « extrémité arrière ».

L'embout 10 est décrit en référence aux figures 2 à 5. L'embout 10 comprend une embase 12 sur laquelle est monté un coussinet de contact 14 pour écran capacitif, le coussinet 14 étant distinct de l'embase 12, et un contacteur 30 comprenant un pointeau 16 monté sur un ressort 18 distinct de l'embase 12, l'ensemble formé par le pointeau 16 et le ressort 18 formant une saillie conductrice s'étendant selon la direction axiale X depuis l'embase 12. Le contacteur 30 est configuré pour assurer une liaison électrique entre le coussinet 14 et une âme conductrice de crayon, dans cet exemple la mine graphite 102. Dans cet exemple, l'embout 10 s'étend selon la direction axiale X. Considéré selon cette direction axiale X, le coussinet 14 est disposé à l'opposé du contacteur 30 par rapport à l'embase 12. Une jupe 28 s'étend du même côté que le contacteur 30 depuis l'embase 12, c'est-à-dire à l'opposé du coussinet 14. L'embout 10 présente une forme générale cylindrique de section transversale circulaire d'axe X. Dans cet exemple, le contacteur 30 est centré sur cet axe X.

Le pointeau 16 est monté sur le ressort 18 travaillant en compression. Le ressort 18 est lui-même monté sur l'embase 12. Dans cet exemple, l'embase 12 présente un ergot 13 autour duquel est emmanché à force le ressort 18. L'embase forme un épaulement 12a autour de l'ergot 13, le ressort 18 étant en appui sur cet épaulement 12a. De la même manière, dans cet exemple le pointeau 16 présente également un ergot 20 autour duquel le ressort 18 est emmanché à force. La pointe 16b et l'ergot 20 du pointeau 16 sont orientés dans des directions opposées, la base (ou extrémité proximale) de l'ergot 20 étant disposé du côté de la base (ou extrémité proximale) de la pointe 16b. Le pointeau 16 forme un épaulement 16a autour de l'ergot 20, le ressort 18 étant en appui sur cet épaulement 16a. Ainsi les deux extrémités du ressort 18 sont respectivement en appui sur les épaulements 12a et 16a.

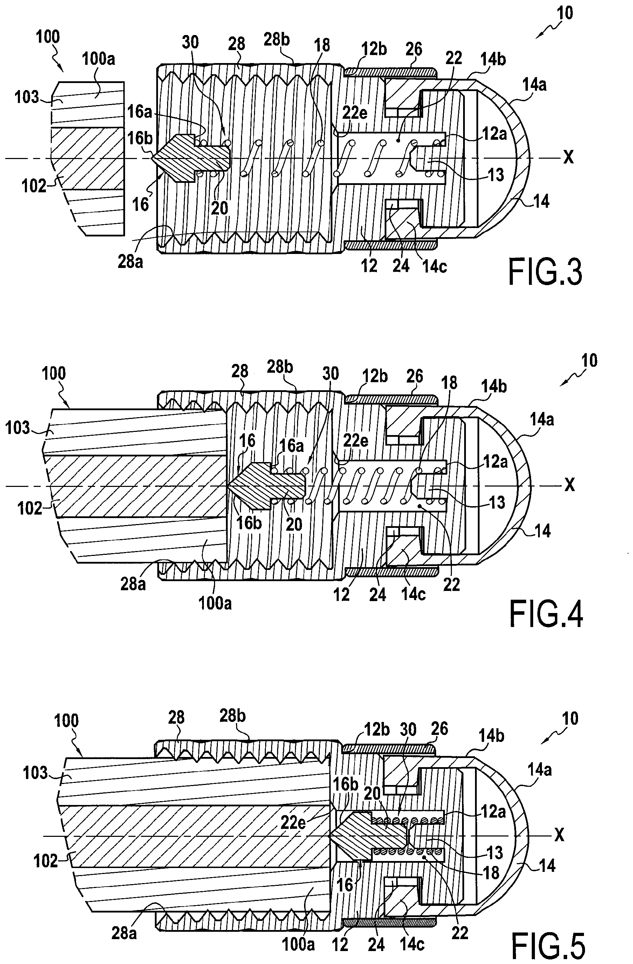

Un logement 22 est ménagé dans l'embase 12, ce logement formant une cavité débouchante recevant le ressort 18. L'ergot 13 de l'embase 12 est disposé au fond de cette cavité. Le pointeau 16 et le ressort 18 font saillie depuis l'embase 12, ou depuis l'orifice de la cavité débouchante du logement 22, lorsque le ressort 18 n'est pas ou partiellement comprimé (cf. figures 3 et 4). Lorsque le ressort 18 est complètement comprimé (cf. figure 5), le logement 22 reçoit l'intégralité du ressort 18 et sensiblement l'intégralité du pointeau 16. En d'autres termes, la longueur selon la direction axiale X du logement 22 est sensiblement égale à la longueur selon la direction axiale X de l'ensemble formé par le pointeau 16 monté sur le ressort 18 lorsque le ressort 18 est totalement comprimé.

Selon une variante non représentée, le ressort 18 et le logement 22 ne sont pas présents tandis qu'un pointeau est directement fixé sur l'embase, en faisant saillie axialement depuis l'embase, ce pointeau formant donc une saillie de contacteur.

La jupe 28 s'étend depuis l'embase 12 du même côté que le contacteur 30. Dans cet exemple l'embase 12 et la jupe 28 forment une seule et même pièce. Cette jupe 28 est de forme cylindrique, et présente un filetage 28a sur sa paroi interne et des reliefs de préhension 28b sur sa paroi externe pour faciliter la préhension de l'embout 10 lors de son vissage sur un crayon. Grâce au filetage 28a, l'embout 10 est facilement montable ou démontable d'un crayon, et forme donc un exemple d'embout amovible. Le logement 22 débouche dans la cavité de la jupe 28 tandis que la jupe 28 forme une cavité débouchant sur l'extérieur de l'embout 10. Ainsi, lorsque le ressort 18 est détendu le contacteur 30 est disposé en partie à l'intérieur de la cavité débouchante formée par la jupe 28 et en partie dans le logement 22, tandis que lorsque le ressort 18 est totalement comprimé le contacteur 30 est disposé en intégralité dans le logement 22. Un chanfrein 22e permet de guider la pénétration du pointeau 16 dans la cavité 22 lors de la compression du ressort 18.

Le coussinet 14 est monté du côté de l'embase opposé au côté où est monté le contacteur 30. Le coussinet 14 est par conséquent également monté du côté de l'embase opposé au côté d'où s'étend la jupe 28. Le coussinet 14 présente une extrémité distale 14a de coopération avec un écran capacitif, cette extrémité 14a présentant dans cet exemple une forme sensiblement hémisphérique creuse. L'extrémité 14a est disposée dans le prolongement d'une partie de fixation 14b de forme sensiblement cylindrique creuse. Cette partie de fixation 14b présente une collerette 14c disposée au voisinage de l'extrémité libre de la partie de fixation 14b, à l'intérieur de la partie de fixation 14b. Cette collerette 14c coopère par encliquetage avec une gorge annulaire 24 ménagée dans l'embase 12. Un anneau 26 est emmanché à force autour de la partie de fixation 14b et de l'embase 12. Cet anneau 26 verrouille l'encliquetage du coussinet 14 sur l'embase 12. L'embase 12 présente un épaulement 12b recevant l'anneau 26 en appui. Selon une variante, l'embout 10 comprend un évent (non représenté) pour équilibrer la pression interne du volume formée entre le coussinet 14 et l'embase 12 et la pression à l'extérieur dudit volume.

L'embase 12, la jupe 28, le ressort 18, le pointeau 16 et l'anneau 26 sont en métal. Dans cet exemple, l'embase 12 la jupe 28 et le pointeau 16 sont en laiton, tandis que le ressort 18 et l'anneau 26 sont en acier. Le coussinet 14 est en matériau élastomère contenant des éléments conducteurs. Dans cet exemple, le coussinet 14 est en silicone chargé en particules de noir de carbone.

Ainsi, dans cet exemple le contacteur 30, comprenant le pointeau 16 et le ressort 18, et le coussinet 14 sont en contact électrique indirect par l'intermédiaire de l'embase 12. L'anneau 26 étant en métal, il participe également au contact électrique entre l'embase 12 et le coussinet 14, mais sa fonction principale est le blocage mécanique du coussinet 14 sur l'embase 12.

Le montage de l'embout 10 sur le crayon 100 est maintenant décrit en référence aux figures 3 à 5.

Sur la figure 3, l'embout est en approche de l'extrémité libre 100a du crayon 100. Le ressort 18 est complètement détendu de sorte que le pointeau 16 est distant de l'embase 12. Dans cet exemple le pointeau 16 est disposé au voisinage de l'ouverture débouchant vers l'extérieur de la cavité formée par la jupe 28. Ainsi, dès qu'on approche l'embout 10 pour son montage sur un crayon, le pointeau 16 entre en contact avec l'âme conductrice 102 dudit crayon. Dans cet exemple, le pointeau 16 s'étendant au moins en partie à l'extérieur de la cavité débouchante formée par la jupe 28 lorsque le ressort 18 est totalement détendu (i.e. n'est pas comprimé), le pointeau 16 contacte l'âme du crayon avant que ce dernier ne contacte la jupe 28.

Dans la figure 4, l'embout 10 est en partie vissé sur le crayon 100. Grâce au ressort de compression 18, le contact électrique avec l'âme est assuré, de sorte que l'embout 10 peut être utilisé avec un écran capacitif de manière satisfaisante. Ceci est particulièrement utile lorsque le montage de l'embout sur le crayon est difficile. Ainsi, même avec un montage partiel ou un montage perfectible, l'embout 10 est utilisable avec un écran capacitif.

Dans la figure 5, l'embout 10 est totalement vissé sur le crayon 100, la compression du ressort est maximale de sorte que la pression de contact entre l'âme 102 et le pointeau 16 est également maximale. Ainsi le contact entre le pointeau 16 et l'âme 102 est optimum. D'un point de vue mécanique, le montage de l'embout 10 sur crayon 100 est également optimum, le risque que l'embout 10 se détache du crayon 100 étant quasi nul.

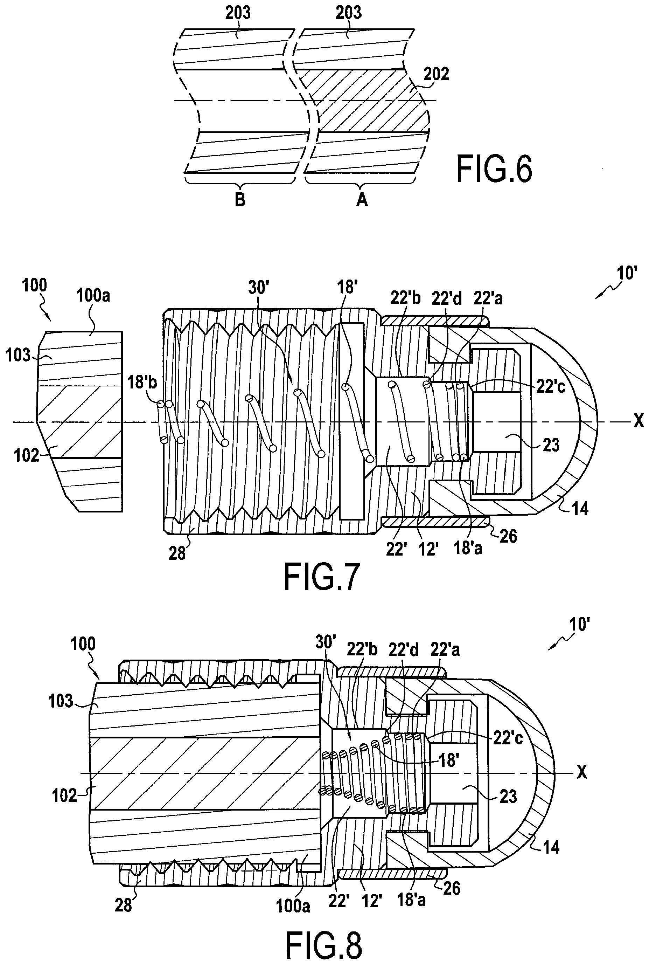

Lorsque l'utilisateur manipule le crayon 100 en le prenant par une zone de préhension en recouvrement axial avec l'âme 102 du crayon, un écran capacitif est sensible au contact de l'embout 10. Par « recouvrement axial » on entend que deux éléments sont disposés dans une même zone axiale, ou dans une même position axiale. En d'autres termes, lorsque l'utilisateur manipule un crayon équipé de l'embout 10 et qu'il place sa main dans une zone axiale où s'étend l'âme 102 du crayon 100, un écran capacitif détecte la présence de l'embout 10 lorsque l'embout 10 est approché ou contacte l'écran capacitif. Dans l'exemple du crayon 100, la mine graphite 102 s'étendant sur toute la longueur du crayon, tout le corps 103 du crayon forme une zone de préhension en recouvrement axial avec l'âme conductrice du crayon. La figure 6 représente une vue partielle en coupe axiale d'un exemple de crayon dont l'âme centrale 202 ne s'étend par sur toute la longueur du corps 203 d'un crayon. Ainsi, la zone A du corps 203 forme une zone de préhension en recouvrement avec l'âme 202 tandis que la zone B du corps 203 forme une zone de préhension qui n'est pas en recouvrement avec l'âme 202.

En d'autres termes, si l'âme s'étend sur une partie réduite du crayon, par exemple sur 10% de la longueur du crayon, la partie de préhension du crayon disposée sur ces mêmes 10% de longueur du crayon forment une partie de préhension en recouvrement avec l'âme. En manipulant le crayon par cette partie de préhension en recouvrement avec l'âme, bien entendu l'âme étant en contact électrique avec le coussinet par l'intermédiaire du contacteur, un écran capacitif détecte la présence de l'embout lorsque cet embout est approché ou contacte l'écran.

Les figures 7 et 8 représentent un deuxième mode de réalisation 10' de l'embout selon l'invention. L'embout 10' diffère de l'embout 10 uniquement par le contacteur 30' et l'embase 12'. Les autres éléments étant identiques, ils ne sont pas décrits à nouveau tandis que les signes de référence de ces derniers restent inchangés.

Le contacteur 30' comprend un ressort à compression 18' tandis qu'il ne comprend pas de pointeau. Ce ressort 18' forme également une saillie de conducteur s'étendant selon la direction axiale X depuis l'embase. Ce ressort 18' présente une extrémité proximale 18'a dont le diamètre est plus grand que le diamètre de l'extrémité distale 18'b du ressort 18'. Lorsque l'embout 10' est monté sur un crayon, comme cela est représenté sur la figure 8, l'extrémité distale 18'b du ressort 18' coopère par contact mécanique avec l'âme 102 du crayon en établissant un contact électrique.

Le ressort 18' est fixé à l'embase 12' par emmanchement à force de l'extrémité proximale 18'a dans le logement 22'. En effet, la paroi du logement 22' présente une première portion axiale 22'a s'étendant depuis le fond 22'c dudit logement présentant un diamètre inférieur au diamètre de l'extrémité proximale 18'a. La paroi du logement 22' présente une deuxième portion axiale 22'b s'étendant depuis un chanfrein intermédiaire 22'd jusqu'à l'ouverture débouchante dudit logement 22' dans la cavité formée par la jupe 28. Cette deuxième portion axiale 22'b permet au ressort 18' d'être librement comprimé ou détendu. Le chanfrein 22'd disposé entre la première et la deuxième portion 22'a et 22'b permet de guider les spires du ressort 18' disposées au voisinage de l'extrémité proximale 18'a lors de la compression dudit ressort 18' pour que ces spires pénètrent facilement dans la première portion axiale 22'a.

Le fond 22'c du logement 22' présente un évent 23 comprenant un trou axial traversant l'embase 12'. Cet évent 23 permet d'équilibrer la pression interne du volume formée entre le coussinet 14 et l'embase 12' et la pression à l'extérieur dudit volume. Ceci permet d'éviter d'éventuelles déformations résiduelles du coussinet 14 après avoir utilisé l'embout.

Le ressort 18' est en acier tandis que l'embase 12' est en laiton.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications.

## Revendications

1. Crayon (100) équipé d'un embout (10, 10') pour écran capacitif, le crayon (100) comprenant un corps isolant (103) et une âme interne longitudinale conductrice (102) s'étendant selon une direction axiale (X) dudit crayon, ledit embout comprenant une embase (12, 12') sur laquelle est monté un coussinet (14) de contact pour écran capacitif, et un contacteur (30, 30') assurant une liaison électrique entre le coussinet (14) et l'âme interne longitudinale conductrice (102) du crayon, ledit contacteur (30, 30') comprenant une saillie conductrice (16, 18 ; 18'), le contacteur (30, 30') comprenant un ressort (18, 18') travaillant en compression.

2. Crayon (100) équipé d'un embout (10, 10') selon la revendication 1, dans lequel l'embout présente une forme sensiblement cylindrique tandis que le contacteur (30, 30') est disposé au voisinage de l'axe central (X) de la forme sensiblement cylindrique.

3. Crayon (100) équipé d'un embout (10, 10') selon la revendication 1 ou 2, dans lequel le coussinet (14) et le contacteur (30, 30') sont respectivement disposés sur des côtés opposés de l'embase (12, 12').

4. Crayon (100) équipé d'un embout (10, 10') selon l'une quelconque des revendications 1 à 3, dans lequel la saillie conductrice (16, 18 ; 18') s'étend selon la direction axiale (X) depuis l'embase (12, 12').

5. Crayon (100) équipé d'un embout (10, 10') selon l'une quelconque des revendications 1 à 4, dans lequel l'embase (12, 12') comprend un logement (22, 22') recevant en tout ou partie le ressort (18, 18').

6. Crayon (100) équipé d'un embout (10, 10') selon l'une quelconque des revendications 1 à 5, dans lequel l'embout (10, 10') comprend une jupe (28) s'étendant depuis l'embase (12, 12') à l'opposé du coussinet (14), ladite jupe (28) étant configurée pour assembler ledit embout à une extrémité (100a) du crayon.

7. Crayon (100) équipé d'un embout (10, 10') selon la revendication 6, dans lequel la jupe (28) présente une paroi interne sensiblement cylindrique équipée d'un filetage (28a) pour visser l'embout sur une extrémité (100a) du crayon.

8. Crayon (100) équipé d'un embout (10, 10') selon la revendication 6 ou 7, dans lequel le contacteur (30, 30') est disposé en tout ou partie dans la cavité formée par la jupe (28).

9. Crayon (100) équipé d'un embout (10, 10') selon l'une quelconque des revendications 1 à 8, dans lequel l'embout (10, 10') est configuré pour être monté de manière amovible sur le crayon (100).

10. Crayon (100) équipé d'un embout (10, 10') selon l'une quelconque des revendications 1 à 9, dans lequel le crayon comprend une mine (102), ladite mine formant l'âme interne longitudinale conductrice.

11. Crayon (100) équipé d'un embout (10, 10') selon la revendication 10, dans laquelle la mine est une mine graphite (102).

## Patentansprüche

1. Stift (100), der mit einer Spitze (10, 10') für einen kapazitiven Bildschirm ausgestattet ist, wobei der Stift (100) einen isolierenden Körper (103) und einen leitenden inneren Längskern (102) aufweist, der sich in einer axialen Richtung (X) des Stifts erstreckt, wobei die Spitze eine Basis (12, 12') aufweist, auf der ein Kontaktfeld (14) für einen kapazitiven Bildschirm angebracht ist, und einen Kontaktgeber (30, 30'), der eine elektrische Verbindung zwischen dem Feld (14) und dem leitenden inneren Längskern (102) des Stiftes herstellt, wobei der Kontaktgeber (30, 30') einen leitenden Vorsprung (16, 18;18') aufweist, wobei der Kontaktgeber (30, 30') eine auf Druck arbeitende Feder (18, 18') aufweist.

2. Stift (100), der mit einer Spitze (10, 10') ausgestattet ist, nach Anspruch 1, wobei die Spitze eine im Wesentlichen zylindrische Form hat, während der Kontaktgeber (30, 30') in der Nähe der Mittelachse (X) der im Wesentlichen zylindrischen Form angeordnet ist.

3. Stift (100), der mit einer Spitze (10, 10') ausgestattet ist, nach Anspruch 1 oder 2, wobei das Kontaktfeld (14) und der Kontaktgeber (30, 30') jeweils auf gegenüberliegenden Seiten der Basis (12, 12') angeordnet sind.

4. Stift (100), der mit einer Spitze (10, 10') ausgestattet ist, nach einem der Ansprüche 1 bis 3, wobei sich der leitende Vorsprung (16, 18; 18') in axialer Richtung (X) von der Basis (12, 12') erstreckt.

5. Stift (100), der mit einer Spitze (10, 10') ausgestattet ist, nach einem der Ansprüche 1 bis 4, wobei die Basis (12, 12') ein Gehäuse (22, 22') aufweist, das die Feder (18, 18') ganz oder teilweise aufnimmt.

6. Stift (100), der mit einer Spitze (10, 10') ausgestattet ist, nach einem der Ansprüche 1 bis 5, wobei die Spitze (10, 10') eine Schürze (28) aufweist, die sich von der Basis (12, 12') gegenüber dem Kontaktfeld (14) erstreckt, wobei die Schürze (28) so angeordnet ist, dass sie die Spitze mit einem Ende (100a) des Stifts verbindet.

7. Stift (100), der mit einer Spitze (10, 10') ausgestattet ist, nach Anspruch 6, wobei die Schürze (28) eine im Wesentlichen zylindrische Innenwand hat, die mit einem Gewinde (28a) zum Aufschrauben der Spitze auf ein Ende (100a) des Stifts ausgestattet ist.

8. Stift (100), der mit einer Spitze (10, 10') ausgestattet ist, nach Anspruch 6 oder 7, wobei der Kontaktgeber (30, 30') ganz oder teilweise in dem durch die Schürze (28) gebildeten Hohlraum angeordnet ist.

9. Stift (100), der mit einer Spitze (10, 10') ausgestattet ist, nach einem der Ansprüche 1 bis 8, wobei die Spitze (10, 10') so konfiguriert ist, dass sie abnehmbar an dem Stift (100) angebracht werden kann.

10. Stift (100), der mit einer Spitze (10, 10') ausgestattet ist, nach einem der Ansprüche 1 bis 9, wobei der Stift eine Mine (102) aufweist, die den leitenden inneren Längskern bildet.

11. Stift (100), der mit einer Spitze (10, 10') ausgestattet ist, nach Anspruch 10, wobei die Mine eine Graphitmine (102) ist.

## Claims

1. Pencil (100) provided with an end piece (10, 10') for a capacitive screen, the pencil (100) comprising an insulating body (103) and a conductive longitudinal internal core (102) extending in an axial direction (X) of said pencil, said end piece comprising a base (12, 12') on which is mounted a contact pad (14) for a capacitive screen, and a contactor (30, 30') which provides an electrical connection between the pad (14) and the conductive longitudinal internal core (102) of the pencil, said contactor (30, 30') comprising a conductive projection (16, 18; 18'), the contactor (30, 30') comprising a spring (18, 18') working in compression.

2. Pencil (100) provided with an end piece (10, 10') according to claim 1, wherein the end piece has a substantially cylindrical shape while the contactor (30, 30') is arranged close to the central axis (X) of the substantially cylindrical shape.

3. Pencil (100) provided with an end piece (10, 10') according to either claim 1 or claim 2, wherein the pad (14) and the contactor (30, 30') are arranged on opposite sides of the base (12, 12').

4. Pencil (100) provided with an end piece (10, 10') according to any of claims 1 to 3, wherein the conductive projection (16, 18; 18') extends in the axial direction (X) from the base (12, 12').

5. Pencil (100) provided with an end piece (10, 10') according to any of claims 1 to 4, wherein the base (12, 12') comprises a housing (22, 22') which receives all or part the spring (18, 18').

6. Pencil (100) provided with an end piece (10, 10') according to any of claims 1 to 5, wherein the end piece (10, 10') comprises a skirt (28) extending from the base (12, 12') opposite the pad (14), said skirt (28) being designed to join said end piece to one end (100a) of the pencil.

7. Pencil (100) provided with an end piece (10, 10') according to claim 6, wherein the skirt (28) has a substantially cylindrical internal wall provided with a thread (28a) for screwing the end piece onto one end (100a) of the pencil.

8. Pencil (100) provided with an end piece (10, 10') according to either claim 6 or claim 7, wherein the contactor (30, 30') is arranged in whole or in part in the cavity formed by the skirt (28).

9. Pencil (100) provided with an end piece (10, 10') according to any of claims 1 to 8, wherein the end piece (10, 10') is designed to be removably mounted on the pencil (100).

10. Pencil (100) provided with an end piece (10, 10') according to any of claims 1 to 9, wherein the pencil comprises lead (102), said lead forming the conductive longitudinal internal core.

11. Pencil (100) provided with an end piece (10, 10') according to claim 10, wherein the lead is graphite lead (102).
